(19) Europäisches Patentamt
European Patent Office
Office européen des brevets

(11) Numéro de publication : **0 449 747 A1**

(12) # DEMANDE DE BREVET EUROPEEN

(21) Numéro de dépôt : **91420064.7**

(22) Date de dépôt : **25.02.91**

(51) Int. Cl.[5] : **C08L 83/04,** C08K 5/32, C08K 5/54

(30) Priorité : **27.02.90 FR 9002697**

(43) Date de publication de la demande : **02.10.91 Bulletin 91/40**

(84) Etats contractants désignés : **AT BE CH DE DK ES FR GB GR IT LI LU NL SE**

(71) Demandeur : **RHONE POULENC CHIMIE**
**25 Quai Paul Doumer**
**F-92408 Courbevoie Cédex (FR)**

(72) Inventeur : **Perrin, Patrice**
**39, rue Boileau**
**F-69006 Lyon (FR)**

(74) Mandataire : **Vogt, Bernard et al**
**RHONE-POULENC CHIMIE Service Brevets Chimie Centre de Recherches des Carrières**
**B.P. 62**
**F-69192 Saint-Fons Cédex (FR)**

(54) **Composition organopolysiloxane à fonction cétiminoxy durcissable en élastomère sans catalyseur organométallique.**

(57) La présente invention concerne une composition organopolysiloxane stable au stockage en l'absence d'humidité et durcissable en élastomère sans catalyseur organométallique de durcissement, caractérisée en ce qu'elle comporte une huile α-ω-dihydroxydiorganopolysiloxane, un cétiminoxysilane, une charge minérale, un silane organo-fonctionnel, une hydroxylamine substituée.

Les compositions selon l'invention sont plus particulièrement utilisables sous la forme de dispersions dans des solvants organiques pour réaliser des revêtements en contact avec des aliments ou pour réaliser des revêtements "antifouling" (antisalissures).

EP 0 449 747 A1

# COMPOSITION ORGANOPOLYSILOXANE A FONCTION CETIMINOXY DURCISSABLE EN ELASTOMERE SANS CATALYSEUR ORGANOMETALLIQUE

La présente invention concerne une composition organopolysiloxane stable au stockage en l'absence d'humidité et durcissable en un élastomère en présence d'humidité comportant comme constituants essentiels un polymère α-ω-dihydroxydiorganopolysiloxane, un agent de réticulation cétiminoxysilane et une charge minérale et pouvant réticuler correctement sans catalyseur organométallique de durcissement.

Les compositions mono-composantes à réticulant cétiminoxysilane comportant généralement en outre une charge minérale et un catalyseur de durcissement, sont bien connues depuis longtemps. Elles sont par exemple décrites dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

Ces compositions sont notamment utilisées pour des applications de revêtement et de jointoiement et en particulier comme agent de scellage dans l'industrie du bâtiment pour réaliser des structures vitrées.

Elles sont également utilisables sous forme de dispersions dans des diluants organiques pour réaliser divers revêtements.

Il est par ailleurs connu par FR-A-2 074 144 d'ajouter un silane amino-fonctionnel à ce type de composition. En outre l'utilisation d'hydroxylamine a déjà été décrite dans des compositions à réticulant alcoxysilane comme par exemple dans EP-A-70 786, US-A-3 770 847 et US-A-3 847 848.

Pour certaines applications particulières telles que les applications contact alimentaire, les applications médicales, les applications revêtement "antifouling" (antisalissures), il est apparu un besoin de disposer d'une composition du type ci-dessus qui puisse réticuler sans catalyseur organométallique, en particulier sans organoétain.

Une autre raison d'essayer de ne pas utiliser un organoétain réside dans le fait que les compositions du type ci-dessus contiennent très souvent un organopolyalcoxysilane porteur d'une fonction amine primaire. Or il est bien connu de l'homme du métier (voir par exemple EP A 184 966 et EP A 267 126 que le couple silane/étain affecte la stabilité au stockage des compositions.

Toutefois l'homme du métier souhaite qu'une telle composition présente une stabilité au stockage, une vitesse de prise, des propriétés mécaniques et d'adhérence au moins aussi bonnes que les compositions connues durcies à l'aide d'un catalyseur organométallique.

La présente invention a précisément pour but de proposer une solution technique à un tel problème.

Ce but et d'autres sont atteints par la présente invention qui concerne en effet une composition organopolysiloxane stable au stockage en l'absence d'humidité et durcissable en un élastomère en présence d'humidité, caractérisée en ce qu'elle comporte :

A. - 100 parties en poids d'au moins polymère α-ω-dihydroxydiorganopolysiloxane de viscosité 700 à 1 000 000 mPa.s à 25°C, formé d'une succession de motifs diorganosiloxy de formule $R_2SiO$, dans laquelle les radicaux R identiques ou différents représentent des radicaux hydrocarbonés ayant de 1 à 10 atomes de carbone, au moins 50 % en nombre des radicaux R étant des groupes méthyle,

B. - 0,5 à 20 parties en poids d'au moins un agent de réticulation comportant au moins un cétiminoxysilane,

C. - 1 à 250 parties en poids de charges minérales,

D. - 0,1 à 10 parties en poids d'un silane organo-fonctionnel de formule :

$$R^1HNR^2\,\underset{\displaystyle |}{\overset{\displaystyle (R^4)_a}{}}\!Si(OR^3)_{3-a} \qquad (1)$$

dans laquelle :

– $R^1$ représente un atome d'hydrogène, un radical alkyle ayant de 1 à 6 atomes de carbone inclusivement ou un radical hydrocarboné aliphatique relié à l'atome d'azote par une liaison carbone et ontenant au moins un groupe amine primaire,

– $R^2$ représente un radical hydrocarboné di-valent ayant de 1 à 6 atomes de carbone présentant éventuellement une fonction éther,

– $R^3$ représente un groupe alkyle ou alcoxyalkyle ayant moins de 8 atomes de carbone et a est 0 ou 1,

– $R^4$ représente un radical hydrocarboné monovalent ayant de 1 à 6 atomes de carbone, un radical phényle, un radical vinyle.

E. - 0,001 à 1 partie en poids d'une hydroxylamine de formule :

$$\begin{matrix} R^5 & & \\ & N\text{-}OH & \quad (2) \\ R^6 & & \end{matrix}$$

dans laquelle le radical $R^5$ représente un radical monovalent hydrocarboné, aliphatique ou cycloaliphatique saturé ou insaturé, aryle, alkylaryle, arylalkyle, le radical $R^6$ étant choisi parmi un radical $R^5$, un atome d'hydrogène, les deux radicaux $R_5$ et $R_6$ pouvant constituer un radical divalent, comportant un hétéroatome choisi parmi O, N et Si et présentant de 2 à 6 atomes de carbone, ladite composition étant exempte de catalyseur organométallique de durcissement.

Les polymères $\alpha$-$\omega$-di(hydroxy)diorganopolysiloxane A de viscosité 700 à 1 000 000 mPa.s à 25 °C, de préférence 1 000 à 700 000 mPa.s à 25 °C, sont des polymères linéaires, constitués essentiellement de motifs diorganosiloxy de formule précitée $R_2SiO$, et bloqués à chaque extrémité de leur chaîne par un groupe hydroxyle ; toutefois, la présence de motifs mono-organosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent :

– les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,

– les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,

– les radicaux alcényles ayant de 2 à 4 atomes de carbone tels que les radicaux vinyle, allyle, butène-2 yle,

– les radicaux aryles et halogénoaryles mono-nucléaires ayant de 6 à 10 atomes de carbone tels que les radicaux phényle, tolyle, xylyle, chlorophényle, dichlorophényle, trichlorophényle,

– les radicaux cyanoalkyles dont les chaînons alkyles ont de 2 à 3 atomes de carbone tels que les radicaux $\beta$-cyanoéthyle et $\gamma$-cyanopropyle, les radicaux méthyle, phényle, vinyle et trifluoro-3,3,3 propyle sont les radicaux préférés.

A titre d'exemples concrets de motifs représentés par la formule $R_2SiO$ on peut citer ceux de formules :

– $(CH_3)_2SiO$,

– $CH_3(CH_2 = CH)SiO$

– $CH_3(C_6H_5)SiO$

– $(C_6H_5)_2SiO$,

– $CF_3CH_2CH_2(CH_3)SiO$,

– $NC - CH_2CH_2(CH_3)SiO$,

– $NC - CH(CH_3)CH_2(CH_2 = CH)SiO$,

– $NC - CH_2CH_2CH_2(C_6H_5)SiO$.

Il doit être compris que l'on peut utiliser comme polymère A un mélange constitué de polymères $\alpha$-$\omega$-di(hydroxy)diorganopolysiloxane qui diffèrent entre eux par le poids moléculaire et/ou la nature des groupements liés aux atomes de silicium.

Ces polymères $\alpha$-$\omega$-di(hydroxy)diorganoplysiloxane A sont commercialisés ; en outre, ils peuvent être aisément fabriqués selon des techniques maintenant bien connues. Il est souhaitable d'utiliser ces polymères après les avoir dévolatilisés par exemple par le procédé de dévolatilisation décrit dans le brevet américain US-A-4 356 116.

Les agents réticulants B sont employés à raison de 0,5 à 20 parties, de préférence 1 à 18 parties, pour 100 parties de polymères $\alpha$-$\omega$-di(hydroxy)diorganopolysiloxanes A. Ce sont des composés organosiliciques portant au moins deux radicaux hydrolysables cétiminoxy par molécule, liés aux atomes de silicium.

De préférence, l'agent réticulant B répond à la formule générale :

$$Y^1_fSiZ^1_{(4-f)}$$

dans laquelle :

– le symbole $Y^1$ représente un radical hydrocarboné en $C_1$-$C_{10}$, substitué ou non par des atomes d'halogène ou des groupes cyano,

– les symboles $Z^1$, identiques ou différents, représentent des radicaux hydrolysables choisis parmi ceux de formules :

$Z^2{}_2C = NO$ , 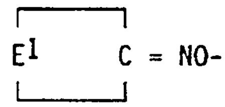 ,

dans lesquelles les symboles $Z^2$, identiques ou différents, représentent des radicaux hydrocarbonés en $C_1$-$C_8$, le symbole $E^1$ représente un radical alkylène en $C_4$-$C_8$,

– le symbole f représente zéro ou un.

Le symbole $Y^1$ peut avoir la même signification que le symbole R des motifs précédents de formule $R_2SiO$ ; ainsi l'illustration donnée pour R convient également pour $Y^1$.

Les symboles $Z^2$ représentent des radicaux hydrocarbonés en $C_1$-$C_8$ englobent notamment :

– les radicaux alkyles en $C_1$-$C_8$ tels que les radicaux méthyle, éthyle, propyle, isopropyle, butyle, isobutyle, éthyl-2 hexyle, octyle,

– les radicaux cycloalkyles en $C_5$-$C_8$ tels que les radicaux cyclopentyle, cyclohexyle, méthylcyclohexayle,

– les radicaux aryles mono-nucléaires en $C_6$-$C_8$ tels que les radicaux phényle, tolyle, xylyle.

Le symbole $E^1$ représente un radical alkylène en $C_4$-$C_8$ qui peut répondre aux formules : $-(CH_2)_4-$, $-(CH_2)_5-$, $-(CH_2)_6-$, $-(CH_2)_7-$, $-CH_2-CH_2(C_2H_5)(CH_2)_3-$, $-CH_2-CH_2-CH(CH_3)CH_2CH_2$.

Comme exemples de silanes B on peut citer les silanes de formules :

- $CH_3Si\ [ON = C(CH_3)_{2]}\ 3$ , $CH_3Si\ [ON = C(CH_3)C_2H_{5]}\ 3$ ,

- $CH_2 = CHSi\ [ON = C(CH_3)C_2H_{5]}\ 3$ , $C_6H_5Si\ ON\ [= C(CH_3)_{2]}\ 3$ ,

- $CH_3Si\ [ON = C\ (C_2H_5)(CH_2)_3CH_{3]}\ 2$ ,

- $(CH_3)_2C = NOSi\ [ON = C(CH_3)C_2H_{5]}\ 3$ ,

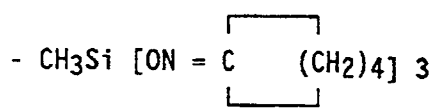

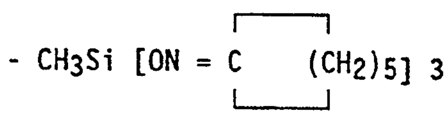

$Si\ [ON = C(C_2H_{5)(CH3]}\ 4$

On préfère plus particulièrement utilisé les silanes de formule :

le vinyltris (méthyléthylcetoxime) silane :

- $(CH_2 = CH)\ Si\ [ON = C(CH_3)(C_2H_{5)]\ 3}$

le méthyl tris (méthyléthylcetoxime) silane :

- $CH_3Si\ [ON = C(CH_3)(C_2H_{5)]\ 3}$

le tétrakis (diméthylcétoxime) silane :

$Si\ [ON = C(CH_3)_2]\ 4$

$Si\ [ON = C(C_2H_5)(CH_{3)]\ 4}$

et leurs mélanges.

Les charges minérales C sont utilisées à raison de 1 à 250 parties, de préférence 20 à 200 parties, pour 100 parties des polymères α-ω-di(hydroxy)diorganopolysiloxanes A.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium traité ou non traité, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges C peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganonocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges C peuvent être constituées d'un mélange de plusieurs types de charges de granulométrie différente ; ainsi par exemple, elles peuvent être constituées de 5 à 95 % de silices finement divisées de surface spécifique BET supérieure à 40 m²/g et de 95 à 5 % de silices plus grossièrement divisées de surface spécifique inférieure à 30 m²/g ou de carbonate de calcium traité ou non traité.

On utilise de préférence de 1 à 50 parties de charges siliceuses choisies parmi les silices de précipitation et les silices de combustion traitées par un composé organosilicique, plus particulièrement dans le cas où les compositions selon l'invention sont dispersées dans un diluant organique. On utilise alors de préférence 2 à 10 parties de charges siliceuses.

Parmi les silanes organo-fonctionnels D de formule (1) ; on préfère plus particulièrement utiliser les silanes de formule :

$(CH_3O)_3Si(CH_2)_3NH(CH_2)_2NH_2$ ; $(CH_3OCH_2CH_2O)_3Si(CH_2)_2NH_2$ ;
$(C_2H_5O)_3Si(CH_2)_3NH_2$ ; $(CH_3OCH_2CH_2O)_3Si(CH_2)_3NH_2$ ;
$(C_2H_5O)_3Si(CH_2)_3O(CH_2)_3NH_2$ ; $(C_2H_5O)_2C_6H_5Si(CH_2)_3O(CH_2)_3NH_2$ ;
$(C_2H_5O)_3SiCH_2O(CH_2)_2NH_2$ ; $(C_2H_5O)_3Si(CH_2)_3O(CH_2)_2NH_2$ ;
$(C_2H_5O)_2CH_3Si(CH_2)_3NH_2$.

Les silanes organo-fonctionnels D encore plus préférées sont :

$(C_2H_5O)_3Si(CH_2)_3NH_2$
γ-aminopopyltriéthoxysilane
$(CH_3O)_3Si(CH_2)_3NH_2$
γ-aminopopyltriméthoxysilane
$(CH_3O)_3Si(CH_2)_3NH(CH_2)_2NH_2$
β-aminoéthyl γ-aminopopyltriméthoxysilane

On utilise de 0,1 à 10, de préférence de 0,5 à 5 parties de silane D pour 100 parties d'huile A.

Les hydroxlamines substituées E qui sont ajoutées dans la composition ont pour formule générale :

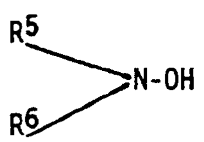

(2)

dans laquelle le radical $R^5$, représente un radical monovalent hydrocarboné aliphatique ou cycloaliphatique saturé ou insaturé, aryle, alkylaryle ou arylalkyle. Le radical $R^6$ a la même signification que le radical $R^5$ et peut en outre représenter un atome d'hydrogène. En règle générale, les radicaux $R^5$ et $R^6$ ont en général au plus 10 atomes de carbone. Eventuellement, les deux radicaux $R^5$ et $R^6$ peuvent constituer ensemble un radical divalent saturé ou insaturé comprenant éventuellement un hétéroatome et comportant de 2 à 6 atomes. On notera qu'il s'agit, dans cette situation, d'hétérocycles saturés ou insaturés que l'on désignera par l'expression "hydroxylamine cyclique substituée". Ces hétérocycliques peuvent comporter un autre atome d'azote, ou un atome d'oxygène ou un atome de silicium.

Préférentiellement, les radicaux $R^5$ et $R^6$ représentent un groupement alkyle ayant, au plus, 4 atomes de carbone ou un radical phényle. Avantageusement, on utilise des hydroxylamines substituées ayant des groupements $R^5$ et $R^6$ identiques.

A titre illustratif, on peut citer parmi les diverses hydroxylamines acycliques utilisables :

– la N-diméthylhydroxylamine
– la N-diéthylhydroxylamine
– la N-dibuthylhydroxylamine
– la N-méthyl N-phénylhydroxylamine
– la N-diphénylhydroxylamine

Parmi les "hydroxylamines cycliques substituées", on citera la N-hydroxymorpholine, la N-hydroxypipéridine, la N-hydroxypyrrolidine.

L'hydroxylamine substituée est employée en quantité catalytique, telle qu'elle représente, pondéralement, de 0,001 à 1 partie de préférence de 0,01 à 0,5 parties pour 100 parties d'huile hydroxylée A.

Les hydroxylamines préférées sont :
- la N-diméthylhydroxylamine
- la N-diéthylhydroxylamine
- la N-dibuthylhydroxylamine
- la N-méthyl N-phénylhydroxylamine
- la N-diphénylhydroxylamine

Conformément à la présente invention on a pu mettre en évidence que l'on pouvait remplacer le catalyseur organométallique de durcissement (généralement un sel d'organoétain, ou un organotitanate) par l'association de silane amino-fonctionnel D et d'hydroxylamine E. E et D doivent nécessairement être utilisés conjointement pour obtenir un durcissement convenable analogue au durcissement obtenu avec un sel d'organoétain. On a constaté ainsi que l'utilisation d'hydroxylamine seule sans silane D conduit à une vitesse de prise insuffisante.

Plus particulièrement dans le cas où les compositions sont utilsiées dispersées dans des diluants organiques pour réaliser des revêtements "antifouling" (antisalissures) comme expliqués plus en détail ci-après, les compositions selon l'invention comportent en outre 1 à 15 parties en poids d'au moins une huile F de formule :

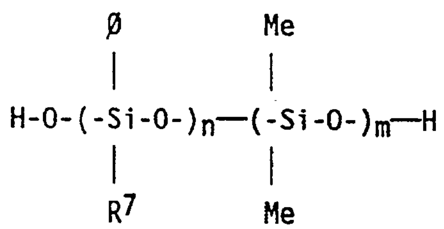

(3)

dans laquelle Ø représente un radical phényle, Me un radical méthyle, $R^7$ identique ou différent est choisi parmi un radical méthyle et phényle, n est choisi parmi un nombre entier compris entre 2 et 100 compris, m est un nombre entier compris entre 0 et 100, n et m sont en outre choisis de telle sorte que la viscosité de l'huile à 25°C soit comprise entre 50 et 100.000 mPa.s

Outre les constituants A à F décrits ci-dessus, les compositions selon l'invention peuvent contenir d'autres ingrédients.

Parmi ces ingrédients figurent des composés organosiliciques, principalement des polymères qui ont la faculté d'agir sur les caractéristiques physiques des compositions conformes à l'invention et/ou sur les propriétés mécaniques des élastomères silicones issus de ces compositions, utilisés à raison de 1 à 150 parties pour 100 parties de A.

Ces composés sont bien connus et le plus souvent dénomés plastifiants, ils comprennent par exemple :
- des polymères α-ω-bis(triméthylsiloxy)diméthylpolysiloxanes de viscosité d'au moins 10 mPa.s à 25 °C ; de préference sont utilisées des huiles α-ω-bis(triméthylsiloxy)diméthylpoly-siloxanes de viscosité 10 mPa.s à 25 °C à 1 500 mPa.s à 25 °C,
- des polymères méthylpolysiloxanes ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$ de 0,01 à 0,15 et à un rapport $CH_3SiO_{1,5}/(CH_3)_3SiO$ de 0,1 à 1,5,
- des huiles α-ω-di(hydroxy)diméthylpolysiloxanes de viscosité 10 à 300 mPa.s à 25 °C et des huiles α-ω-di(hydroxy)méthylphénylpolysiloxanes de viscosité 200 à 1 000 mPa.s à 25 °C,
- du diphénylsilanediol, du tétraméthyl-1,1,3,3 disiloxanediol.

Les polymères diorganopolysiloxanes précédents peuvent être remplacés totalement ou partiellement par des composés organiques inertes vis-à-vis des divers constituants des bases et miscibles au moins avec les polymères diorganopolysiloxanes A.

Comme exemples de plastifiants organiques on peut en particulier citer des coupes pétrolières de point d'ébullition supérieur à 200 °C, formées d'un mélange d'hydrocarbures aliphatiques et/ou aromatiques, des polybutylènes, de préference de faible poids moléculaire, comme décrits dans les brevets français FR-A-2 254 231, FR-A-2 293 831 et FR-A-2 405 985, les produits d'alkylation du benzène en particulier, les polyalkylbenzènes obtenus par alkylation du benzène par des oléfines à longue chaîne linéaire ou ramifiée, en particulier des oléfines à 12 atomes de carbone issues de la polymérisation du propylène, comme décrits par exemple dans le brevet français FR-A-2 446 49.

On peut également utiliser les polymères mixtes organiques polydiorganosiloxane tels que les copolymères à blocs polyoxyalkylènes polyorganosiloxanes, des esters phosphoriques (FR-A-2 372 203), du phosphate

de trioctyle (FR-A-2 415 132), et des esters dialcooliques d'acides dicarboxyliques (US-A-2 938 007).

Les produits d'alkylation du benzène de poids moléculaire supérieur à 200, en particulier les alkylbenzènes et les polyalkylbenzènes sont les plastifiants organiques préférés.

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes A.

Pour fabriquer les compositions conformes à l'invention, il est nécessaire dans le cas de compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes A et éventuellement F, le silane amino-fonctionnel D et les charges C et d'ajouter ensuite à l'empâtage obtenu les réticulants B et l'hydroxylamine E.

Il est également possible de mélanger les polymères A et éventuellement F et les réticulants B et d'ajouter ultérieurement, les charges C, le silane d'adhérence D et l'hydroxylamine E. Au cours de ces opérations, les mélanges peuvent être chauffés à une température comprise dans l'intervalle 50-180 °C sous la pression atmosphérique ou sous une pression réduite afin de favoriser le départ de matières volatiles telles que de l'eau, des polymères de bas poids moléculaire.

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés choisis parmi :

-les hydrocarbures aliphatiques, cycloaliphatiques, aromatiques, halogénés ou non, tels que le n-hepatne, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,

La quantité de diluant demeure en général peu importante, elle est en général de 20 à 150 parties de diluant pour 100 parties de composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 µm. Après la projection des dilutions, les diluants s'évaporent et les compositions libérées durcissent en un film caoutchouteux parfaitement uniforme.

Le temps de durcissement se situe habituellement entre 5 minutes et plusieurs heures ne dépassant pas 10 heures ; cette durée dépend des facteurs déjà cités à propos de la durée de durcissement des compositions déposées en couches plus épaisses et également de la rapidité avec laquelle les diluants s'évaporent. Cette technique de dépôt par pulvérisation est très pratique pour enduire d'un film mince de très grandes surfaces et plus spécialement les coques de navires et les filets pour l'élevage des animaux aquatiques, de façon générale, toute surface immergée dans l'eau douce ou l'eau de mer. Le dépôt d'un film silicone antiadhérent sur les surfaces des bateaux en contact avec l'eau de mer évite l'encrassement de ces surfaces dû à la fixation et au développement d'organismes marins tels que les algues, bernacles, huitres, ascidies ; cette application "antifouling" figure par exemple dans le brevet américain US-A-3 702 778.

Pour améliorer l'effet "antifouling" il est recommandé d'ajouter aux dispersions selon l'invention au moins l'un des additifs ci-dessous :

– un composé liquide hydrocarboné, par exemple une polyoléfine, un plastifiant, une huile lubrifiante (FR-A-2 375 305),

– des paraffines liquides et des masses cireuses du type pétrolatum (KOKAI JP-A-83/013 673),

– un polymère thermoplastique tel que du PVC, un copolymère chlorure de vinyle/acétate de vinyle (KOKAI JP-A-79/026 826),

– des substances fluorescentes (EP-A-63 388),

– des tensio-actifs cationiques, anioniques, non-ioniques, amphotères (KOKAI JP-A-85/258 271).

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions contraires, les parties et pourcentages sont en poids.

Exemple 1 et 2 et exemple comparatif 3 Différentes matières premières utilisées :

$A_1$ : huile α,ω-dihydroxypolydiméthylsiloxane de viscosité 70.000 mPa.s à 25 °C.
$A_2$ : huile identique à $A_1$, mais de viscosité 3.500 mPa.s à 25 °C.
$P_1$ : résidu lourd alkylé provenant de l'alkylation du benzène par le tétrapoprylène et commercialisé par la Société Pétrosynthèse sous la dénomination alkylat 150 $DT^R$.
$P_2$ : huile polydiméthylsiloxane bloquée α,ω-triméthysilyle de viscosité 1.000 mPa.s à 25 °C.
$B_1$ : méthyltris (méthyléthylcétiminoxy) silane.
$B_2$ : vinyltris (méthyléthylcétiminoxy) silane.
$C_1$ : silice de combustion de surface spécifique 150 $m^2/g$.
$C_2$ : silice de combustion hydrophobe traitée de surface spécifique 260 $m^2/g$.
$C_3$ : quartz broyé de granulométrie moyenne 5 μm.
$C_4$ : $T_iO_2$ en poudre.
$C_5$ : Carbonate de calcium de précipitation de granulométrie moyenne 0,070 μm traité par de l'acide stéarique.
$D_1$ : bis (acétylacétonate) de di n-butylétain.
$D_2$ : dilaurate de di n-butylétain.
$D_3$ : β-aminoéthyl γ-aminopopyltriméthoxysilane
$D_4$ : diéthylhydroxylamine.
$D_5$ : mélange 50/50 de tétraméthylguanidine et d'une amine grasse.
$F_1$ : huile α,ω-dihydroxypoly(diméthyl) (diphényl) siloxane de viscosité 25.000 mPa.s à 25 °C et comportant 13 % en poids de motifs diphénylsiloxy.

Préparation d'une composition non coulante transparente :

Dans un malaxeur à agitation tripale et sous balayage d'azote, on introduit successivement l'huile A, le plastifiant P, la silice de combustion C, éventuellement une autre charge C et on homogénise le tout pendant 5 minutes à 450 tours/mn. On ajoute alors le catalyseur D dilué dans un peu d'huile $P_2$. On ajoute ensuite le silane $D_5$, agite 1 minute à 250 tours/mn, puis tout en continuant l'agitation, on met le mélangeur sous une pression absolue de 3 $KP_a$. Après dégazage de l'azote sous pression réduite durant 5 minutes, on introduit de l'azote jusqu'à atteindre la pression atmosphérique. On procède alors au transfert de la composition en cartouches étanches à l'humidité de l'air.

Mesure des propriétés physiques :

On mesure la coulabilité (en mm) des compositions selon le test Boeing.

L'extrusion est appréciée en g/minute en mesurant le début d'une composition extrudée sous une pression de 2 bars au travers d'une buse calibrée de diamètre intérieur 5,7 mm.

On fait subir à une composition un vieillissement accéléré en soumettant pendant 7 jours des cartouches à une température de 70°C et on observe l'aspect du produit.

Pour déterminer la faculté de cette compositin de durcir rapidement à l'air ambiant en un élastomère, on l'étale à l'aide d'une râcle en une couche de 2 mm d'épaisseur sur une feuille en polyéthylène préalablement traitée par un agent tensioactif anionique commercial ; cet agent est constitué du sel de sodium d'un sulfate d'alkyle dont le groupe alkyle est ramifié et possède au moins 12 atomes de carbone.

On note la période de temps au bout de laquelle la surface de la couche déposée est non collante. Cette mesure est effectuée avec une baguette en bois que l'on met en contact par l'une de ses deux extrémités, avec la surface de la couche déposée ; on examine si une adhérence significative existe entre la baguette et la couche. Cette mesure sera appelée temps non collant (t en minute) indiquée dans le tableau 1 ci-après.

Sur le film vieux de 7 jours, on mesure :

– la dureté SHORE A (DSA) selon la norme NF-T-51 109,

– la résistance à la rupture (R/R) en MPa selon la norme NF-T-46 002,

– l'allongement à la rupture (A/R) en % selon la norme NF-T-46 002,

– le module sécant (M.S) en MPa pour un allongement de 100 %.

Les résultats obtenus sont rassemblés dans le tableau 1 ci-après.

La nature et la tenueur des différents constituants des compositions des exemples et leurs propriétés physiques sont rassemblées dans le tableau 1 ci-après :

Tableau 1 :

| Exemples | 1 | 2 | 3 |
|---|---|---|---|
| $A_1$ parties en poids | 60 | 60 | 60 |
| $A_2$ parties en poids | 40 | 40 | 40 |
| $P_1$ parties en poids | 26 | 26 | 26 |
| $B_1$ parties en poids | 8 | 4 | 4 |
| $B_2$ parties en poids | 0 | 4 | 4 |
| $C_1$ parties en poids | 12 | 12 | 12 |
| $D_2$ parties en poids | 0 | 0 | 0,5 |
| $D_3$ parties en poids | 1 | 1 | 1 |
| $D_4$ parties en poids | 0,2 | 0,2 | 0 |
| Coulabilité (mn) | 0 | 0 | 0 |
| Extrusion g/minute | 660 | 560 | 500 |
| t (minute) | 7 | 7 | 6 |
| Vieillissement accéléré | normal | normal | prise en masse |
| Dureté SHORE A | 25 | 24 | 25 |
| M.Y 100 % (MPa) | 0,5 | 0,6 | 0,5 |
| R/R (MPa) | 1,6 | 1,5 | 1,4 |
| A/R % | 430 | 300 | 290 |

Du tableau 1 il apparaît que les compositions selon l'inventin sont stables au stockage et réticulent correctement en un élastomère ayant des prorpiétés mécaniques comparables à une composition du même type catalysée à l'étain et qui s'avère non stable au stockage.

Exemples 4, 5 et comparatif 6 et 7 :

Composition non coulante opaque (blanche) :

Selon le mode opératoire de l'exemple 1 on réalise une composition non coulante comportant en outre du carbonate de calcium.

Les différents constituants des compositions, leur teneur respective et leurs propriétés physiques sont rassemblés dans le tableau 2 ci-après.

Dans tableau 2 il apparaît que la composition de l'exemple comparatif 6, où la diéthylhydroxylamine a été remplacée par une autre amine est en fait coulante et présente un temps non collant (t) trop long.

Par ailleurs les composants de l'invention des exemples 6, 7 présentent des propriétés physiques tout à fait comparables à la composition de l'exemple comparatif 7 catalysée à l'étain.

Tableau 2 :

| Exemples | 4 | 5 | 6 | 7 |
|---|---|---|---|---|
| $A_1$ parties en poids | 60 | 60 | 60 | 60 |
| $A_2$ parties en poids | 40 | 40 | 40 | 40 |
| $P_1$ parties en poids | 26 | 26 | 26 | 26 |
| $B_1$ parties en poids | 8 | 8 | 8 | 8 |
| $B_2$ parties en poids | 0 | 0 | 0 | 0 |
| $C_1$ parties en poids | 12 | 12 | 12 | 12 |
| $C_5$ parties en poids | 160 | 160 | 160 | 160 |
| $D_2$ parties en poids | 0 | 0 | 0 | 0,5 |
| $D_3$ parties en poids | 1 | 1 | 1 | 1 |
| $D_4$ parties en poids | 0,2 | 0,4 | 0 | 0 |
| $D_5$ parties en poids | 0 | 0 | 2 | 0 |
| Coulabilité (mn) | 1 | 2 | 10 | 1 |
| Extrusion g/minute | 900 | 750 | 800 | 780 |
| t (minute) | 30 | 12 | 60 | 12 |
| Vieillissement accéléré | normal | normal | presque normal | normal |
| Dureté SHORE A | 26 | 30 | 20 | 22 |
| M.Y 100 % (MPa) | 0,5 | 0,6 | 0,4 | 0,3 |
| R/R (MPa) | 0,7 | 0,8 | 1 | 0,9 |
| A/R % | 320 | 270 | 450 | 340 |

Exemples 8 et comparatif 9 et 10 :

Composition coulante sans huile phénylée hydroxylée.

Préparation :

Dans un malaxeur à agitation tripale et sous balayage d'azote, on introduit successivement les huiles A, le plastifiant P, et les charges C en commençant par la charge la plus fine et en terminant par la charge la plus grossière. On ajoute le reticulant B et on agite modérément (150 tours/minute) pendant 10 minutes. On ajoute le catalyseur D et on agite 1 minute. On ajoute ensuite $D_3$, on agite 1 minute à pression atmosphérique puis 5 minutes sous pression réduite jusqu'à atteindre une pression absolue de 3 KPa environ. Après dégazage, on introduit de l'azote dans l'appareil jusqu'à pression atmosphérique et on transvase la composition fluide dans des cartouches étanches à l'humidité de l'air.

Mesure des propriétés physiques :

Elles sont effectuées selon les méthodes exposées à l'exemple 1 ci-dessus. La nature des différents ingrédients des compositions, leurs teneurs, les propriétés physiques des compositions sont rassemblées dans le tableau 3 ci-après. La mesure de coulabilité est remplacée par la mesure de la viscosité de la composition en mPa.s à 25°C.

Du tableau 3, il apparaît que les compositions des exemples 8, 9 et 10 présentent des propriétés physiques similaires. Toutefois la composition de l'exemple comparatif 9 présente un temps de toucher non collant trop élevé.

Tableau 3 :

| Exemples | 8 | 9 | 10 |
|---|---|---|---|
| $A_2$ parties en poids | 100 | 100 | 100 |
| $C_1$ parties en poids | 7 | 7 | 7 |
| $C_3$ parties en poids | 50 | 50 | 50 |
| $C_4$ parties en poids | 3 | 3 | 3 |
| $B_1$ parties en poids | 4 | 4 | 4 |
| $B_2$ parties en poids | 4 | 4 | 4 |
| $D_2$ parties en poids | 0 | 0 | 00,5 |
| $D_3$ parties en poids | 2 | 2 | 2 |
| $D_4$ parties en poids | 0,05 | 0 | 0,05 |
| Viscosité (mPa.s) | 30.000 | 30.000 | 22.000 |
| t (minute) | 30 | 45 | 30 |
| Vieillissement accéléré | normal | normal | normal |
| Dureté SHORE A | 40 | 42 | 45 |
| M.Y 100 % (MPa) | 1,1 | 1,2 | 1,9 |
| R/R (MPa) | 3,6 | 3,6 | 3,6 |
| A/R % | 200 | 200 | 170 |

Exemples 11, 12 et exemples comparatifs 13, 14 et 15 :

Composition coulante avec huile phénylée hydroxylée.

Préparation et mesure des propriétés physiques :

On opère comme à l'exemple 8 et on ajoute l'huile F en même temps que l'huile A.

Les résultats obtenus sont rassemblés dans le tableau 4 ci-après.

Du tableau 4, il résulte que la composition avec hydroxylamine mais sans silane aminé exemple comparatif 13 présente un temps de toucher non collant beaucoup trop important.

Tableau 4 :

| Exemples | 11 | 12 | 13 | 14 | 15 |
|---|---|---|---|---|---|
| $A_2$ parties en poids | 100 | 100 | 100 | 100 | 100 |
| $C_2$ parties en poids | 9 | 4 | 8 | 4 | 4 |
| $B_1$ parties en poids | 3 | 3 | 3 | 3 | 3 |
| $B_2$ parties en poids | 3 | 3 | 3 | 3 | 3 |
| $F_1$ parties en poids | 5 | 5 | 5 | 5 | 5 |
| $D_1$ parties en poids | 0 | 0 | 0 | 0,1 | 0,1 |
| $D_3$ parties en poids | 1 | 1 | 0 | 1 | 1 |
| $D_4$ parties en poids | 0,05 | 0,05 | 0,05 | 0 | 0 |
| Viscosité (mPa.s) | 23.000 | 7.000 | 15.000 | 5.000 | -- |
| Coulabilité (mn) | -- | -- | -- | -- | 90 |
| t (minute) | 60 | 60 | 240 | 30 | 75 |
| Vieillissement accéléré | normal | normal | normal | normal | normal |
| Dureté SHORE A | 27 | 20 | 24 | 21 | 21 |
| M.Y 100 % (MPa) | 0,54 | 0,34 | 0,44 | 0,32 | 0,5 |
| R/R (MPa) | 0,97 | 0,5 | 0,88 | 0,49 | 0,66 |
| A/R % | 190 | 145 | 235 | 170 | 145 |

**Revendications**

1. Composition organopolysiloxane stable au stockage en l'absence d'humidité et durcissable en un élastomère en présence d'humidité, caractérisée en ce qu'elle comporte :

   A. - 100 parties en poids d'au moins un polymère α-ω-dihydroxydiorganopolysiloxane de viscosité 700 à 1 000 000 mPa.s à 25 °C, formé d'une succession de motifs diorganosiloxy de formule $R_2SiO$, dans laquelle les radicaux R, identiques ou différents, représentent des radicaux hydrocarbonés ayant de 1 à 10 atomes de carbone, au moins 50 % en nombre des radicaux R étant des groupes méthyle.

   B. - 0,5 à 20 parties en poids d'au moins un agent de réticulation comportant au moins un cétiminoxysilane.

   C. - 1 à 250 parties en poids de charges minérales.

   D. - 0,1 à 10 parties en poids d'un silane organo-fonctionnel de formule :

$$R^1HNR^2\overset{\displaystyle (R^4)_a \atop |}{Si}(OR^3)_{3-a} \qquad (1)$$

   dans laquelle :

   – $R^1$ représente un atome d'hydrogène, un radical alkyle ayant de 1 à 6 atomes de carbone inclusivement ou un radical hydrocarboné aliphatique relié à l'atome d'azote par une liaison carbone et contenant au moins un groupe amine primaire,

   – $R^2$ représente un radical hydrocarboné di-valent ayant de 1 à 6 atomes de carbone présentant éventuellement une fonction éther,

   – $R^3$ représente un groupe alkyle ou alcoxyalkyle ayant moins de 8 atomes de carbone et a est 0 ou 1,

   – $R^4$ représente un radical hydrocarboné monovalent ayant de 1 à 6 atomes de carbone, un radical phényle, un radical vinyle.

   E. - 0,001 à 1 partie en poids d'une hydroxylamine de formule :

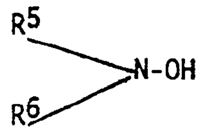

(2)

dans laquelle le radical $R^5$ représente un radical monovalent hydrocarboné, aliphatique ou cycloaliphatique saturé ou insaturé, aryle, alkylaryle, arylalkyle, le radical $R^6$ étant choisi parmi un radical $R^5$, un atome d'hydrogène, les deux radicaux $R_5$ et $R_6$ pouvant constituer un radical divalent, comportant un hétéroatome choisi parmi O, N et Si et présentant de 2 à 6 atomes de carbone, ladite composition étant exempte de catalyseur organométallique de durcissement.

2. Composition selon la revendication 1, caractérisée en ce qu'elle comporte en outre :
F. - 1 à 15 parties en poids d'au moins une huile de formule :

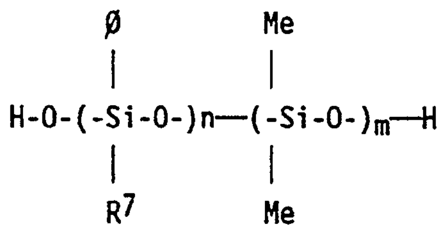

(3)

dans laquelle Ø représente un radical phényle, Me un radical méthyle, $R^7$ est choisi parmi un radical méthyle et phényle, n est choisi parmi un nombre entier compris entre 2 et 100 compris, m est un nombre entier compris entre 0 et 100, n et m sont en outre choisis de telle sorte que la viscosité de l'huile à 25°C soit comprise entre 50 et 100.000 mPa.s

3. Composition selon l'une quelconque des revendications précédentes, caractérisée en ce qu'elle comporte comme charge C 1 à 50 parties de silice de précipitation et/ou de combustion traitée par un composé organosilicique.

4. Composition selon l'une quelconque des revendications précédentes, caractérisée en ce que l'hydroxylamine E est choisie parmi :
   - la N-diméthylhydroxylamine
   - la N-diéthylhydroxylamine
   - la N-dibuthylhydroxylamine
   - la N-méthyl N-phénylhydroxylamine
   - la N-diphénylhydroxylamine

5. Composition selon l'une quelconque des revendications précédentes, caractérisée en ce que B l'agent de réticulation répond à la formule générale :

$$Y^1{}_fSiZ^1{}_{(4-f)}$$

dans laquelle :
   - le symbole $Y^1$ représente un radical hydrocarboné en $C_1$-$C_{10}$, substitué ou non par des atomes d'halogène ou des groupes cyano,
   - les symboles $Z^1$, identiques ou différents, représentent des radicaux hydrolysables choisis parmi ceux de formules :

$Z^2{}_2C = NO$ , 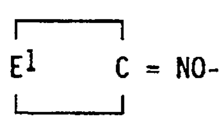 ,

dans lesquelles les symboles $Z^2$, identiques ou différents, représentent des radicaux hydrocarbonés en $C_1$-$C_8$, le symbole $E^1$ représente un radical alkylène en $C_4$-$C_8$,

– le symbole f représente zéro ou un.

**6.** Composition selon la revendication 5, caractérisée en ce que le l'agent de réticulation B est choisi parmi les silanes de formule :
le vinyltris (méthyléthylcetoxime) silane :
- $(CH_2 = CH)\ Si\ [ON = C(CH_3)(C_2H_5)]_3$
le méthyltris (méthyléthylcetoxime) silane :
- $CH_3Si\ [ON = C(CH_3)(C_2H_5)]_3$
le tétrakis (diméthylcétoxime) silane :
$Si\ [ON = C(CH_3)_2]\ 4$
$Si\ [ON = C(C_2H_5)(CH_3)]\ 4$
et leurs mélanges.

**7.** Composition selon l'une quelconque des revendications précédentes, caractérisée en ce que le silane amino-fonctionnel D est choisi parmi :
$(C_2H_5O)_3Si(CH_2)_3NH_2$
γ-aminopopyltriéthoxysilane
$(CH_3O)_3Si(CH_2)_3NH_2$
γ-aminopopyltriméthoxysilane
$(CH_3O)_3Si(CH_2)_3NH(CH_2)_2NH_2$
β-aminoéthyl γ-aminopopyltriméthoxysilane

**8.** Dispersion dans un diluant organique caractérisée en ce qu'elle comporte :
– 100 parties d'une composition telle que définie à l'une quelconque des revendications 1 à 7,
– 20 à 150 parties d'un diluant organique.

**9.** Utilisation d'une dispersion telle que définie à la revendication 8, pour réaliser un revêtement en contact avec les produits alimentaires, ou un revêtement en contact avec de l'eau douce ou de l'eau de mer.

Office européen des brevets

# RAPPORT DE RECHERCHE EUROPEENNE

Numero de la demande

EP 91 42 0064

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 070 786 (RHONE-POULENC)<br>* Revendications 1,3,4,5; page 4, lignes 21-30; page 11, lignes 12-20; example 5, page 14 * | 1-8 | C 08 L 83/04<br>C 08 K 5/32<br>C 08 K 5/54 |
| Y | EP-A-0 050 453 (TORAY)<br>* Revendications 1,7; page 5, paragraphe 2; page 6, dernier paragaphe; page 7, paragraphe 1 * | 1-8 | |
| Y | EP-A-0 208 963 (BAYER)<br>* Revendications 1-6 * | 1-8 | |
| A | EP-A-0 340 120 (RHONE-POULENC)<br>* Revendications 1,2 * | 1-8 | |
| A | US-A-3 770 847 (G.F. LENGNICK)<br>* Revendications 1,3,5 * | 1 | |

DOMAINES TECHNIQUES RECHERCHES (Int. Cl.5)

C 08 L
C 08 K

Le présent rapport a été établi pour toutes les revendications

| Lieu de la recherche | Date d'achèvement de la recherche | Examinateur |
|---|---|---|
| LA HAYE | 28-05-1991 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)